(19) **Europäisches Patentamt**
**European Patent Office**
**Office européen des brevets**

(11) **EP 3 910 928 B1**

(12) **EUROPÄISCHE PATENTSCHRIFT**

(45) Veröffentlichungstag und Bekanntmachung des Hinweises auf die Patenterteilung:
**13.03.2024   Patentblatt 2024/11**

(21) Anmeldenummer: **20174906.6**

(22) Anmeldetag: **15.05.2020**

(51) Internationale Patentklassifikation (IPC):
**H04N 23/698** *(2023.01)*   **G06V 20/58** *(2022.01)*
**G08G 1/14** *(2006.01)*

(52) Gemeinsame Patentklassifikation (CPC):
**G08G 1/147; G06V 20/586; G08G 1/143; G08G 1/148; H04N 23/698**

(54) **VERFAHREN ZUM ERSTELLEN EINES RÄUMLICH HOCHGENAUEN, VERORTETEN STRASSENZUGPANORAMABILDES UND SYSTEM HIERFÜR**

METHOD FOR CREATING A SPATIALLY HIGHLY ACCURATE, LOCATED STREET PANORAMA PHOTO AND SYSTEM FOR SAME

PROCÉDÉ DE GÉNÉRATION D'UNE IMAGE PANORAMIQUE DE ROUTE DE HAUTE PRÉCISION ET LOCALISÉE ET SYSTÈME ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.11.2021   Patentblatt 2021/46**

(73) Patentinhaber: **Parkling GmbH**
**10178 Berlin (DE)**

(72) Erfinder:
• **FRETTER, Christoph**
**12435 Berlin (DE)**
• **HÜLSEBUSCH, Detlev**
**10115 Berlin (DE)**
• **SELIG, Oleg**
**10245 Berlin (DE)**

(74) Vertreter: **Wunderlich & Heim Patentanwälte PartG mbB**
**Irmgardstraße 3**
**81479 München (DE)**

(56) Entgegenhaltungen:
**WO-A2-01/61985       US-A1- 2005 111 753**
**US-A1- 2007 076 016     US-A1- 2008 187 181**

**Beschreibung**

Die Erfindung betrifft ein Verfahren zum Erstellen eines räumlich hochgenauen, verorteten Straßenzugpanoramabildes eines Straßenzuges aus einem mittels eines Fahrzeugs aufgenommenen kontinuierlichen Film mit Ortsinformationen.

Ferne betrifft die Erfindung ein System zum Erstellen eines räumlich hochgenauen, verorteten Straßenzugpanoramabildes eines Straßenzuges aus einem mittels eines Fahrzeugs aufgenommenen kontinuierlichen Film mit Ortsinformationen.

Durch die Zunahme der Bevölkerung in städtischen Gebieten nimmt der Verkehr, insbesondere auch der Individualverkehr mit Pkws, zu. Gerade im innerstädtischen Bereich führt diese massive Zunahme der Verkehrsdichte zu Problemen, die einen Mangel an Platzangebot zur Folge haben, der nicht mehr mit einfachen Mitteln gelöst werden kann. Weitere Probleme sind die damit einhergehende Lärmbelästigung durch den Verkehr aber auch die mittlerweile immer kritischer gesehene Belastung durch Schadstoffe.

Studien haben gezeigt, dass ca. 30% des innerstädtischen Verkehrs kein klassischer Beförderungsverkehr ist, sondern auf Fahrzeuge zurückzuführen ist, die auf Parkplatzsuche sind.

Hochrechnungen auf Deutschland ergeben, dass hierbei 1,9 Milliarden Stunden für die Parkplatzsuche aufgewendet werden. Hierbei werden 3,2 Milliarden Liter Treibstoff verbraucht. Insgesamt geht man von einem volkswirtschaftlichen Verlust in Höhe von 40,4 Milliarden EUR aus.

Der Wunsch nach einem Parkraummanagement, der diesen Verkehr zur Parkplatzsuche reduziert, ist daher in zunehmendem Maße gegeben.

Bei derartigen Systemen wird grundsätzlich von zwei Zuständen der Datenermittlung unterscheiden. Zum einen müssten statische Daten beschafft werden, aus denen hervorgeht, wo Parkplätze sind, zu welchen Zeiten man an diesen Parkplätzen parken darf, aber auch Informationen, wie die Parkplätze zu beparken sind, beispielsweise als Längsparker oder Querparker. Dies beinhaltet auch Informationen über Parkverbotszonen sowie eventuelle Preise für das Parken. Derartige Daten werden als statische Daten bezeichnet und stellen die Grundvoraussetzung für ein Parkraummanagement dar.

Der zweite Zustand der Datenermittlung ist das Ermitteln von sogenannten dynamischen Daten, welche Informationen über die aktuelle Parkplatzbelegungssituation darstellen.

Eine Möglichkeit, um statische Daten zu ermitteln ist beispielsweise aus der DE 10 2018 214 510 A1 bekannt. Hierbei können jedoch nur Informationen zum Freisein eines Parkplatzes oder nicht ermittelt werden. Daten, zu welchen Zeiten das Parken erlaubt ist oder ob es sich beispielsweise um eine Einfahrt handelt, können nur schwer festgestellt werden.

Einerseits ist es beispielsweise aus Google Street View bekannt, mittels Fahrzeugen georeferenzierte Rundum - also 360°-Bilder - von verschiedenen Positionen in einer Straße zu erzeugen. Allerdings reichen derartige Daten nicht aus, um ausreichend Informationen zu generieren, welche zum Berechnen von statischen Parkplatzdaten notwendig sind. Beispielsweise können die Positionen von einzelnen gestatteten Parkplätzen gar nicht oder nur schwer ermittelt werden. In ähnlicher Weise sind oft auch Daten zu erlaubten Parkzeiten und dergleichen nicht sichtbar.

Aus diesem Grund wird in der unveröffentlichten europäischen Patentanmeldung 20 159 008.0 vorgeschlagen, keine einzelnen Aufnahmen eines Straßenzuges zu tätigen, sondern einen kontinuierlichen Film zu erstellen. Jedoch können aus dem Film selbst keinerlei Informationen, insbesondere statische Informationen zur Parkplatzsituation entnommen werden.

Aus der US 2007/076016 A1 sowie der US 2008/187181 A1 sind verschiedene Verfahren bekannt, um aus einzelnen Bildern ein Panoramabild zu erzeugen. Aus der WO 01/61985 A2 ist ein Kamerasensor zu entnehmen, welcher zum Erzeugen eines Panoramabildes eingesetzt werden kann.

Aus der US 2005/111753 A1 ist ebenfalls ein Verfahren zum Erstellen eines räumlich hochgenauen, verorteten Strassenzugpanoramabildes eines Strassenzuges aus einem mittels eines Fahrzeuges aufgenommenen Video mit Ortsinformationen bekannt. Das Panoramabild wird durch Erzeugung von Werten für Zwischenpixel an Stellen zwischen Mosaiklinien in einer Mosaikebene eines Raumzeit-Volumens der aufgenommen Bilder erzeugt. Die Zwischenpixelwerte werden in Abhängigkeit von den verzerrten Zeitintervallen und den Werten der Pixel in den Kamerabildern mit Hilfe verschiedener bekannter Verfahren und Algorithmen erzeugt. Das Panoramabild wird aus Mosaikstreifen erzeugt, deren Breite in Abhängigkeit von den verzerrten Zeiten bestimmt wird.

Der Erfindung liegt daher die Auf g a b e zugrunde, ein Verfahren und ein System anzugeben, um aus einem kontinuierlichen Film eines Straßenzugpanoramas ein Straßenzugpanoramabild zu erzeugen, welches insbesondere zum Ermitteln von statischen Daten für Parkplätze dienen kann.

Diese Aufgabe wird erfindungsgemäß durch ein Verfahren mit den Merkmalen des Anspruchs 1 sowie ein System mit den Merkmalen des Anspruchs 13 gelöst. Vorteilhafte Ausführungsformen der Erfindung sind in den Unteransprüchen, in der Beschreibung und in den Figuren und deren Erläuterung angegeben.

Entsprechend des erfindungsgemäßen Verfahrens wird ein Film verwendet, bei dem Bilddaten in einem 90°-Winkel zur Bewegungsrichtung des Fahrzeuges beziehungsweise zum Verlauf des Straßenzuges in jedem Frame des Films vorhanden sind. Dieser Winkel oder Bereich wird im Folgenden als Null-Position bezeichnet. Ferner weist der Film einen Erfassungswinkel von mindestens 20° in der Horizontalen auf, wobei mindestens 5° des Erfassungswinkels vor und hinter der Null-Position vorhanden sind. Mittels der Ortsinformationen wird in dem Film zu jedem Frame eine exakte Aufnahmeposition ermittelt. Anschließend wird in einem Analyseschritt der physikalische Abstand zwischen der Aufnahmeposition eines ersten und eines nachfolgenden Frames berechnet. Dann wird ein Bildstreifen des ersten Frames von der Null-Position in Richtung der Aufnahmeposition des nachfolgenden Frames, welcher mit einem ersten Teil des Abstandes korrespondiert und ein Bildstreifen des nachfolgenden Frames von der Null-Position in Richtung der Aufnahmeposition des ersten Frames, welcher mit einem zweiten Teil des Abstandes korrespondiert, zum Erstellen des Straßenzugpanoramabildes verwendet. Hierbei wird der erste und der zweite Teil des Abstandes so gewählt, dass sie zusammen dem gesamten Abstand zwischen den beiden Aufnahmepositionen entsprechend.

Ein Grundgedanke der Erfindung kann darin gesehen werden, dass der Film in seine einzelnen Frames zerlegt wird und anschließend jeder Frame einzeln beziehungsweise mit den benachbarten Frames bearbeitet also ausgewertet wird, um ein hochgenaues, verortetes Straßenzugpanoramabild zu erzeugen. Hierbei wurde entsprechend der Erfindung erkannt, dass gerade der Bereich um die Null-Position in jedem Frame keine oder kaum optische Verzerrungen aufweist. Die Bilddaten, die sich im Bereich der Null-Position befinden, sind daher besonders gut geeignet, ein Straßenzugpanoramabild zu erzeugen, welches hochgenau ist und möglichst keine optischen Verzerrungen aufweist. Dies bedeutet, dass insbesondere Entfernungen und Winkel nicht oder nur kaum verzerrt sind. Basierend auf diesem Straßenzugpanoramabild können so Entfernungen und Größen ermittelt werden, die mit der Realität im überwiegenden Maße übereinstimmen.

Der Film, der für das erfindungsgemäße Verfahren aufgenommen wird, kann beispielsweise durch ein Seitenfenster des Fahrzeuges aufgenommen werden. Hierbei ist es wesentlich, dass die Null-Position auf dem Film vorhanden ist. Die Null-Position entspricht genau dem Bereich in einem Frame, der senkrecht zur Fahrtrichtung des Fahrzeuges beziehungsweise senkrecht zum Verlauf des Straßenzuges liegt und so genau von der Kamera ohne optische Verzerrungen aufgenommen wird. Außerdem wird entsprechend der Erfindung berücksichtigt, dass, wie zuvor beschrieben, genau dieser Bereich geeignet ist, um das Straßenzugpanoramabild zu erzeugen. Daher ist es notwendig, dass in dem Film möglichst ein Bereich auf beiden Seiten der Null-Position vorhanden ist.

Weiter ist es möglich, beim Erstellen des Straßenzugpanoramabildes jeweils Bilddaten, das heißt Bildstreifen, welche sich über die gesamte Höhe des Films beziehungsweise jedes Frames erstrecken, zum Zusammensetzen des Straßenzugpanoramabildes zu verwenden. Die gesamte Höhe wird hierbei durch den vertikalen Erfassungswinkel der Kamera definiert.

Ein Fahrzeug, welches zum Erstellen des Films verwendet wird, bewegt sich zwar idealerweise mit konstanter Geschwindigkeit entlang eines Straßenzuges. Dies ist jedoch eine Idealvorstellung. Daher wird entsprechend des erfindungsgemäßen Verfahrens der Abstand zwischen der Aufnahmeposition von zwei benachbarten Frames ermittelt. Es handelt sich insbesondere um den physikalischen Abstand der realen Aufnahmepositionen. Dieser Abstand variiert abhängig von der Geschwindigkeit. Ein Fahrzeug in Sinne der Erfindung kann beispielsweise ein Auto, ebenso auch ein Fahrrad, mit oder ohne Anhänger, sein.

Fährt ein Fahrzeug beispielsweise während der Aufnahme mit einer Geschwindigkeit von 50 km/h und die Kamera nimmt mit 24 Bildern pro Sekunde auf, so liegt Abstand zwischen zwei benachbarten Frames oder Bildern des Films im Bereich von 58 cm. Fährt das Fahrzeug langsamer, so verringert sich dieser Abstand.

Dies wird entsprechend der Erfindung dadurch berücksichtigt, dass abhängig vom Abstand Bereiche aus benachbarten Frames verwendet werden, um anschließend zum Zusammenstellen des Straßenzugpanoramabildes verwendet zu werden. Diese Bildbereiche sind kleiner je langsamer sich das Fahrzeug bei der Aufnahme des Filmes bewegt hat.

Um einen möglichst guten Ausgleich zwischen benachbarten Bildern zu erreichen, wird entsprechend der Erfindung der Abstand aufgeteilt und aus einem ersten Frame nur ein Bildstreifen verwendet, der einem Teil des Abstandes entspricht, der in Richtung des zweiten Frames beziehungsweise dessen Aufnahmeposition ausgerichtet ist. Anders ausgedrückt, wird aus einem ersten Frame ein Bildstreifen verwendet, welcher von der Null-Position entgegen der Fahrtrichtung des Fahrzeuges ausgereichtet ist. In dem nachfolgenden Frame wird genau anders verfahren und ein Bildstreifen verwendet, der von der Null-Position in Fahrtrichtung des Fahrzeuges ausgerichtet ist.

Hierdurch kann auch eine Geschwindigkeitsvariation möglichst gut abgefangen werden und ein hochgenaues Straßenzugpanoramabild erzeugt werden.

Dieser Analyseschritt wird für jeden Frame des Films, der den Straßenzug zeigt, zu dem ein Straßenzugpanoramabild erzeugt werden soll, durchgeführt. Hierdurch werden aus dem gesamten Film von den jeweils relevanten Frames Bildstreifen rechts und links der Null-Position, welche der Orthogonalen des Blickwinkels entspricht, verwendet, um das Straßenpanoramabild zu erzeugen. Um Abweichungen zu Beginn und am Ende eines Straßenzuges zu vermeiden, werden beim ersten und letzten Frame des Films jeweils nur die in Richtung des Verlaufs des Straßenzuges von der Null-Position ausgehenden Anteile der entsprechenden Frames verwendet. Anders ausgedrückt bedeutet dies, dass vom ersten Frame nur der Bereich verwendet wird, welcher in Fahrtrichtung des Fahrzeuges zeigt, und vom letzten Frame, der den Straßenzug anzeigt, analog nur der Bereich, welcher von der Null-Position aus gesehen gegen die Fahrtrichtung des Fahrzeugs zeigt.

Selbstverständlich ist es mit der Erfindung auch möglich, einen kontinuierlichen Film zu verwenden, welcher mehrere Straßenzüge am Stück abfährt. Wesentlich ist es jedoch für die Auswertung, dass jedes Mal für die Analyseschritte Filmbereiche verwendet werden, welche einen Straßenzug zeigen. Dies bedeutet beispielsweise, dass der Film vorher jeweils entsprechend geteilt werden kann.

Das Straßenzugpanoramabild wird aus den einzelnen Bildstreifen der Frames, welche, wie zuvor mit Bezug auf den Analyseschritt beschrieben, ausgewählt werden, zusammengesetzt. Hierbei korrespondiert das entstehende Straßenzugpanoramabild mit der Länge des Straßenzuges. Dies wird erreicht, indem im Wesentlichen nur Bereiche, welche sich nah an der Null-Position befinden, zum Erstellen des Straßenzugpanoramabildes verwende werden und daher ein optischer Aufnahmefehler nicht oder nur in sehr geringem Maße vorhanden ist. Es ist daher nicht notwendig, diesen Aufnahmefehler aufwändig herauszurechnen, sondern er kann vernachlässigt werden.

Bevorzugt entsprechen der ersten Teil des Abstandes und der zweite Teil des Abstandes jeweils der Hälfte des Abstandes. Hierdurch kann eine einfache Auswertung im Analyseschritt durchgeführt werden. Grundsätzlich ist es jedoch auch möglich, den ersten und den zweiten Teil des Abstandes unterschiedlich, beispielsweise abhängig von der Geschwindigkeit oder sonstigen Umgebungsvariablen zu wählen. Je mehr Bilder pro Sekunde im Film vorhanden sind, umso unwichtiger ist es jedoch, die zwei Teile des Abstandes unterschiedlich aufzuteilen, da der relative Geschwindigkeitsunterschied zwischen den beiden Aufnahmen von zwei benachbarten Frames gering ausfällt und vernachlässigt werden kann.

Es hat sich herausgestellt, dass eine einfache Berechnung des Straßenzugpanoramabildes erreicht werden kann, wenn die Aufnahmeposition relativ zum Beginn des Straßenzuges ermittelt wird. Dies bietet zum einen die Möglichkeit, dass der Abstand relativ einfach bestimmt werden kann, zum anderen kann so auch eine leichte anschließende Auswertung des erstellten Straßenzugpanoramabildes durchgeführt werden, da der Beginn des Straßenzugpanoramabildes den Null Punkt oder en Ursprung für weitere Berechnungen darstellt, während das Ende des Straßenzugpanoramabildes die Endposition darstellt. Dazwischen wird das Straßenzugpanoramabild maßstabsgetreu nachgestellt.

Vorteilhaft wird der Abstand, welcher zum Ermitteln der Bildstreifen verwendet wird, in Pixel eines Frames umgerechnet. Dazu ist es vorteilhaft, wenn der Film derart gewählt wird, dass beispielsweise 10 cm-Abstand mindestens 35 Pixeln entsprechen.

Es ist dabei vorteilhaft, wenn in dem Analyseschritt von einer Tiefe für die Berechnungen im Bereich zwischen 3,5 m und 4,5 m, bevorzugt um 4 m ausgegangen wird. Erfahrungsgemäß stellt die Tiefe, also die senkrechte Entfernung zur Bewegungsrichtung des Fahrzeuges, von 4 m in Bezug auf die Aufnahmeposition des Films meist eine gute Entfernung dar, um die relevanten Informationen aus einem Straßenzugpanoramabild, insbesondere zum Erzeugen von statischen Parkplatzdaten zu ermitteln.

Es hat sich herausgestellt, dass es für ein hochgenaues Straßenzugpanoramabild vorteilhaft ist, wenn der Film derart gewählt wird, dass 1°-Erfassungswinkel in der Horizontalen mindestens 25 Pixel eines Frames aufweist.

Bevorzugt ist es, wenn mindestens zu einem Frame die Pixel ermittelt werden, welche auf der Null-Position des Frames liegen. Dies kann beispielsweise dadurch geschehen, dass bei der Aufnahme des Films an einer Häuserecke und/oder einem Kalibrierungsmittel vorbeigefahren wird und anschließend die entsprechenden Frames analysiert werden. Man kann beispielsweise davon ausgehen, dass die beiden Hauswände, die eine Häuserecke bilden, derart platziert sind, dass eine Hauswand im Wesentlichen im 90°-Winkel zur Straße steht. Wird nun mit einer geringen Geschwindigkeit beim Erzeugen des Films mit dem Fahrzeug an der Häuserecke vorbeigefahren, so kann der Frame ermittelt werden, zu welchem Zeitpunkt die senkrecht zur Straße verlaufende Hauswand gerade nicht mehr gesehen werden kann - also nur die Ecke sichtbar ist - und an welcher Position im Frame dies ist. Diese Position stellt die Null-Position dar. Ähnlich kann auch mit einem entsprechenden Kalibrierungsmittel verfahren werden, welches beispielsweise am Straßenrand aufgestellt wird.

Unter Umständen kann es vorteilhaft sein, wenn die Nullposition mittels Positions- und/oder Orientierungsdaten des Fahrzeuges korrigiert wird. Im Idealfall bewegt sich das Fahrzeug parallel zum Verlauf des Straßenzuges, so dass seine Bewegungsrichtung im Wesentlichen dem Verlauf des Straßenzuges entspricht. Dies gilt näherungsweise auch bei einem Straßenverlauf, der eine Kurve beschreibt.

Ist es aber für das Fahrzeug beispielsweise notwendig einem anderen stehenden Fahrzeug auszuweichen, so entspricht die Blickrichtung senkrecht zur Fahrtrichtung des Fahrzeuges nicht mehr einem Blick senkrecht zum Verlauf des Straßenzuges. Dies kann unter Umständen zu Verzerrungen im hierdurch erzeugten Straßenzugpanoramabild führen. Ein Ausgleich ist möglich, wenn Daten über den Straßenverlauf vorliegen und gleichzeitig in dem Film oder als parallele Daten Informationen zur Position und/oder Orientierung des Fahrzeuges vorliegen. Hierdurch kann in einer Auswertung ein derartiges Ausweichmanöver erfasst werden und veranlasst werden, dass die Nullposition auch in entsprechenden Frames korrigiert wird.

Um ein ausreichend großes Straßenzugpanoramabild mit einer guten Detailgenauigkeit zu erreichen ist es bevorzugt, wenn der Film derart gewählt wird, dass er einen Erfassungswinkel in der Vertikalen von mindestens 100° und in der Horizontalen von mindestens 50° aufweist. Ein so im Hochformat aufgenommener Film ermöglicht es, die relevanten Daten, die zum Erzeugen von statischen Parkplatzinformationen benötigt werden, im Anschluss aus einem derart aufgebauten Straßenzugpanoramabild besonders einfach zu ermitteln.

Ferner betrifft die Erfindung ein System zum Herstellen eines räumlich hochgenauen, verorteten Straßenzugpanoramabildes eines Straßenzuges aus einem mittels eines Fahrzeugs aufgenommenen kontinuierlichen Film mit Ortsinformationen. Dieses System weist mindestens eine Rechnereinheit auf, welche zum Ausführen des Verfahrens nach einem der Ansprüche 1 bis 13 geeignet ist. Anders ausgedrückt kann das erfindungsgemäße Verfahren in beliebigen Systemen, insbesondere in einem Computersystem implementiert werden. Hierbei ist es für die Auswertung lediglich notwendig, das System mit dem kontinuierlichen Film mit den Ortsinformationen zu versorgen.

Die Erfindung wird nachfolgend anhand eines schematischen Ausführungsbeispieles unter Bezugnahme auf die Figuren näher erläutert. Hierbei zeigen:

Fig. 1     eine Seitenansicht auf ein Fahrzeug beim Erstellen eines kontinuierlichen Films;

Fig. 2     eine Frontansicht auf das Fahrzeug beim Erstellen des kontinuierlichen Films;

Fig. 3     eine Aufsicht auf ein Fahrzeug beim Erstellen des kontinuierlichen Films;

Fig. 4     eine Skizze zur Verdeutlichung der grundlegenden mathematischen Berechnungen;

Fig. 5     eine Skizze zum Erläutern der verwendeten Daten aus einem Frame; und

Fig. 6     ein stark vereinfachtes Straßenzugpanoramabild.

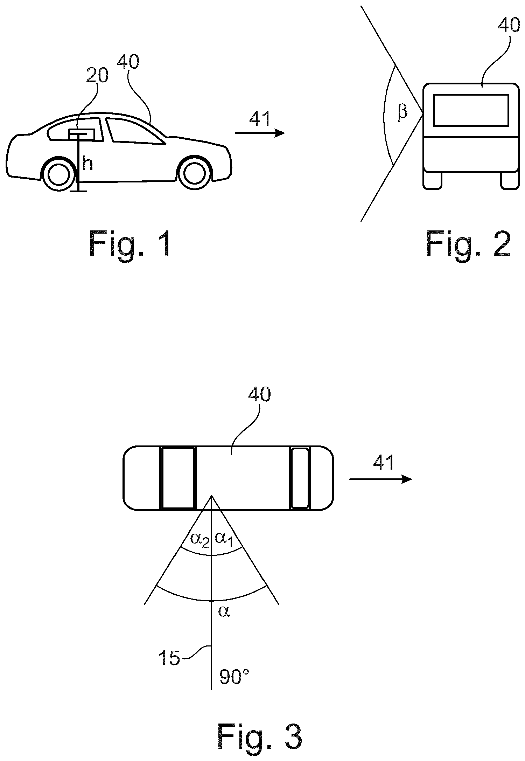

Im Folgenden wird mittels der Figuren 1, 2 und 3 die Aufnahmesituation des kontinuierlichen Filmes zum Erzeugen eines erfindungsgemäßen hochgenauen, verorteten Straßenzugpanoramabildes 60 naher erläutert. Auch eine Kamera 20, welche in einem Fahrzeug 40 vorgesehen ist, mittels der der kontinuierliche Film aufgenommen wird, wird beschrieben.

Hierbei ist in Fig. 1 das Fahrzeug 40 in einer Seitenansicht, in Fig. 2 in einer Ansicht von vorne und in Fig. 3 in einer Ansicht von oben dargestellt.

Die Kamera 20 wird mittels einer Befestigungseinrichtung in dem Fahrzeug 40 fest fixiert. Dies bedeutet, dass sie möglichst robust und sicher im Fahrzeug 40 angebracht ist.

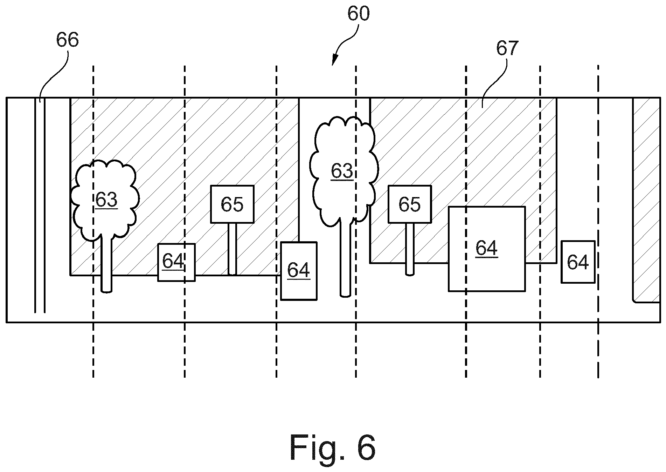

Mit der Kamera 20 wird während einer Fahrt mit dem Fahrzeug 40 ein kontinuierlicher Film, bevorzugt mindestens im 4K UHD-Standard, das heißt mit mindestens 3.840 Pixeln auf 2.160 Pixeln und 24 Bildern pro Minute aufgezeichnet. Ziel ist es, basierend auf diesem Film ein möglichst realistisches und unverzerrtes Straßenzugpanoramabild 60, wie in Fig. 6 gezeigt, mittels des erfindungsgemäßen Verfahrens zu erzeugen.

Dieses Straßenzugpanoramabild 60 kann verwendet werden, um statische Daten für ein Parkplatzmanagement zu ermitteln. Hierfür ist es notwendig, auf dem Straßenzugpanoramabild 60 zum einen den Straßenrand zu erfassen und zum anderen auch relativ nah an dem Straßenrand befindliche Schilder, auf denen Informationen zu Parkzeiten oder dergleichen stehen können.

Daher wird die Kamera 20 möglichst nah am Fenster des Fahrzeuges 40 platziert. Die Kamera wird bevorzugt in einer Höhe h von ca. 1,2 Meter, bevorzugt in Höhe von 1,21 Meter, angeordnet.

Die Kamera kann ein Weitwinkelobjektiv aufweisen. Diese kann beispielsweise eine Brennweite von 20 mm haben.

Wie aus den Figuren 2 und 3 ersichtlich, ist die Kamera zur Aufnahme im Hochformat angeordnet. Dies bedeutet, dass ein Kamerawinkel $\beta$, welcher den vertikalen Erfassungswinkel darstellt, größer ist als ein Kamerawinkel $\alpha$, der den horizontalen Erfassungswinkel angibt.

So wird beispielsweise ein Weitwinkelobjektiv gewählt, welches einen vertikalen Erfassungswinkel um mindestens 100°, bevorzugt 107° und einen horizontalen Erfassungswinkel von über 55°, bevorzugt 62° aufweist.

Die Kamera 20 wird in dem Fahrzeug 40 so angeordnet, dass sich der vertikale Erfassungswinkel $\beta$ im Wesentlichen gleich verteilt. Dies bedeutet, dass sich der gleiche Teil des Erfassungswinkels $\beta$ in einem Bereich über 90°, das heißt einer Parallele zur Straßenfläche und unter 90° befindet.

Dem gegenüber kann die Kamera 20 für den horizontalen Erfassungswinkel $\alpha$ anders ausgerichtet werden. Es ist wesentlich, dass der Bereich von 90° zur Fahrtrichtung 41 im Erfassungswinkel $\alpha$ beinhaltet ist. Dieser wird im Folgenden als Null-Position 15 bezeichnet. Die Kamera 20 kann im Fahrzeug 40 so angeordnet, dass ein größerer Teil des Erfassungswinkels $\alpha$ in Fahrtrichtung 41 nach vorne zeigend angeordnet ist. Beispielsweise kann der Erfassungswinkel $\alpha_1$, welcher den Bereich von der 90°-Linie nach vorne in Fahrtrichtung 41 beschreibt, 40°, bevorzugt über 45°, sein. Dem entsprechend ist der Erfassungsbereich $\alpha_2$, welcher den entgegen der Fahrrichtung ausgerichteten Erfassungsbereich des Winkels $\alpha$ betrifft, bei einem gesamten Erfassungsbereich $\alpha$ von 62° im Bereich von 17°.

Eine derartige Anordnung ist vorteilhaft, da sich das Fahrzeug, wie bereits beschrieben, in die Fahrtrichtung 41 bewegt und so die Kamera 20 nach vorne schauend ausgerichtet ist was es auch ermöglicht beispielsweise Verkehrsschilder zu erfassen die quer zur Straße ausgerichtet sind.

Als Kamera 20 wird bevorzugt eine Kamera eingesetzt, welche eine hohe Lichtempfindlichkeit, beispielsweise im Bereich von ISO 51200 und eine Verschlusszeit von 1:4.000 Sekunden und eine Blende von 5,6 hat. Ziel ist es hierbei, während der Aufnahme einen Bereich von möglichst nah am Fahrzeug 40, beispielsweise ab 1,25 Metern bis ins Unendliche, möglichst scharf aufzunehmen, damit diese Daten anschließend als statische Daten für ein Parkplatzmanagementsystem ausgewertet werden können.

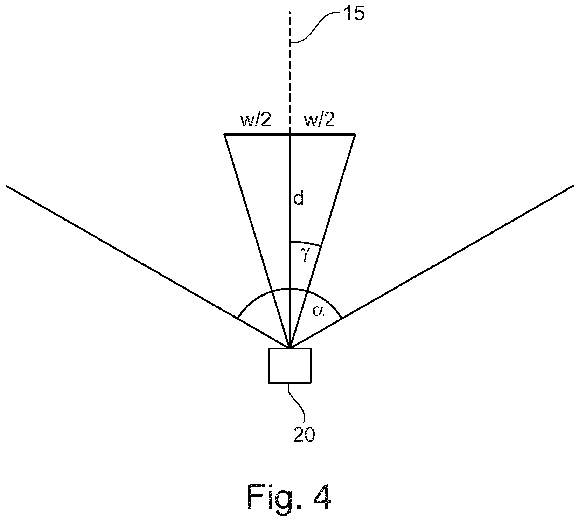

Nun werden unter Bezugnahme auf Fig. 4 die notwendigen mathematischen Grundlagen erläutert, die es entsprechend der Erfindung ermöglichen, das hochgenaue verortete Straßenpanoramabild 60 zu erzeugen, aus dem anschließend statische Parkplatzinformationen ermittelt werden können. In Fig. 4 ist die Kamera 20 mit ihrem horizontalen Erfassungswinkel $\alpha$ dargestellt.

Ein Fahrzeug im Stadtverkehr, welches zum Erzeugen des kontinuierlichen Films verwendet wird, fährt mit einer angenommenen maximalen Durchschnittsgeschwindigkeit von 50 km/h.

$$50\,\frac{km}{h} \approx 13{,}8\,\frac{m}{s}$$

Bei einem kontinuierlichen Film mit 24 Bildern pro Sekunde, das heißt Frames pro Sekunde, bedeutet dies, dass ungefähr alle 58 cm Fahrstrecke ein neues Bild aufgenommen wird.

$$13{,}8\,m : 24 \approx 57{,}87\,cm$$

Da die Fahrstrecke im Wesentlichen parallel zum Straßenrand beziehungsweise zum aufgenommenen Straßenzug ist, bedeutet dies, dass aus jedem Frame des kontinuierlichen Films ein Bereich entnommen werden muss, der ca. 58 cm entspricht, um das Straßenzugpanoramabild zu erzeugen. Dieser Bereich verringert sich, sofern sich das Fahrzeug langsamer bewegt.

In Fig. 4 ist dieser Bereich von 58 cm, welcher aus dem entsprechenden Frame entnommen werden soll, mit w beziehungsweise $w/2$ gekennzeichnet, wobei sich dieser Bereich gleichmäßig um die Null-Position 15 erstreckt.

Selbstverständlich kann aus einem Frame, welcher nichts anderes als ein Bild ist, welches aus Pixeln aufgebaut ist, ohne weitere Angaben kein Bereich, welcher 58 cm entspricht, entnommen werden. Bei einer bekannten Auflösung der Kamera, beispielsweise mit einem horizontalen Erfassungswinkel $\alpha$ von 62°, welcher auf 2.061 Pixel abgebildet ist, ist es möglich, zu bestimmen, dass pro Grad 35 Pixel vorhanden sind. Wird nun ermittelt, welcher Erfassungswinkel für den gewünschten Abstand w notwendig ist, so kann über den Winkel die notwendige Pixelzahl ermittelt werden.

Entsprechend der Erfindung wurde erkannt, dass bei einer standardmäßigen Aufnahme eines Straßenzugpanoramas in einem Film aus einem Fahrzeug die mittlere Tiefe d etwa 4 m beträgt. Somit kann über eine Tangensberechnung wie untenstehend gezeigt, ermittelt werden, dass $\gamma$ ungefähr 4° entspricht. Anders ausgedrückt bedeutet dies, dass etwa 8° des Erfassungswinkels verwendet werden müssen, um eine Strecke abzubilden, welche ungefähr 58 cm in 4 m Abstand entspricht.

$$\tan(\gamma) = \frac{w/2}{d}$$

$$\gamma = tan^{-1}\left(\frac{w/2}{d}\right) = tan^{-1}\left(\frac{0{,}58/2}{4}\right) \approx 4{,}14°$$

Basierend auf 35 Pixel pro Grad entspricht

$$2\gamma \approx 8° = 280\ Pixel$$

welche gleichmäßig um die Null-Position 15 verteilt sind. Dies bedeutet, dass aus einem Frame für einen Abstand von 58 cm ein Bildstreifen entnommen werden muss, welcher 280 Pixel breit ist. Die Höhe des Bildstreifens entspricht der maximalen vertikalen Auflösung des Frames: Im hier beschriebenen Ausführungsbeispiel etwa 3.820 Pixel.

Liegt die Tiefenannahme von 4 m um 50% falsch, so hätte dies zur Folge, dass ein Pixel am Rande eines 60 cm breiten Bildstreifens ca. 15 cm Abweichung hat, also eigentlich entweder etwa 15 cm oder 45 cm von der Null-Position entfernt ist und nicht wie angenommen 30 cm. Bei einem Annahmefehler von 25% liegt die Abweichung bei etwas 7,5 cm. Diese Abweichungen sind in der Regel vernachlässigbar und beeinflussen eine spätere Auswertung kaum.

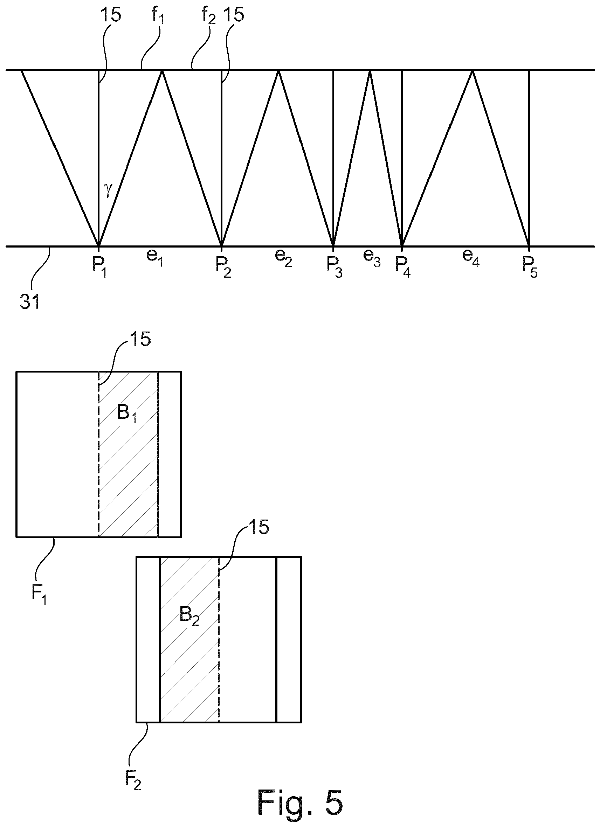

Im Folgenden wird unter Bezugnahme auf Fig. 5 verdeutlicht, wie das Straßenzugpanoramabild 60 unter Zuhilfenahme einzelner Bildstreifen erstellt wird. Hierfür wird angenommen, dass sich das Fahrzeug 40 entlang der Linie 31 bewegt hat und an den Aufnahmepositionen $P_1$, $P_2$, $P_3$, $P_4$ und $P_5$ jeweils ein Frame des Filmes erstellt wurde. Hierbei ist der Abstand zwischen den einzelnen Aufnahmepositionen $P_1$, $P_2$, $P_3$, $P_4$ und $P_5$ absichtlich unterschiedlich gewählt, um unterschiedliche Geschwindigkeiten des Fahrzeuges 40 abzubilden. Selbstverständlich würden derartig starke Unterschiede in Realität nicht auftreten.

Zu den Aufnahmepositionen $P_1$ und $P_2$ ist jeweils ein entsprechend vereinfacht dargestellter Frame $F_1$ und $F_2$ des Filmes zusätzlich unter den entsprechenden Aufnahmepositionen $P_1$ und $P_2$ gezeigt. Zur Vereinfachung wird der horizontale Aufnahmewinkel $\alpha$ entsprechend Fig. 4 nicht gezeigt, sondern lediglich der jeweils notwendige horizontale Aufnahmewinkel $\gamma$, wie er zuvor in Bezug auf Fig. 4 erläutert wurde.

Entsprechend des erfindungsgemäßen Verfahrens wird zunächst der physikalische Abstand $e_1$ zwischen den beiden Aufnahmepositionen $P_1$ und $P_2$ ermittelt. Dann wird dieser Abstand $e_1$ zwischen die beiden Frames $F_1$ und $F_2$, welche an den Aufnahmepositionen $P_1$ und $P_2$ aufgenommen wurde, in zwei Teile $f_1$, $f_2$ des Abstandes $e_1$ aufgeteilt. In dem hier gezeigten Ausführungsbeispiel wird der Abstand $e_1$ gleich auf beide Frames $F_1$ und $F_2$ verteilt. Basierend auf der zuvor dargelegten Rechnung kann ermittelt werden, wieviel Pixel insgesamt für den jeweiligen Bildstreifen verwendet werden müssen. Die entsprechenden Pixel, welche dem halben Abstand entsprechen, werden nun in einem ersten Schritt zum Erzeugen eines Bildstreifens $B_1$ aus dem Frame $F_1$ von der Null-Position in Fahrtrichtung verwendet, wobei selbstverständlich die gesamte Höhe des Frames $F_1$ zum Erzeugen des Bildstreifens $B_1$ eingesetzt wird.

In analoger Weise werden für den nachfolgenden Frame $F_2$ wiederum die Hälfte der notwendigen Pixel, diesmal jedoch von der Null-Position entgegen der Fahrtrichtung verwendet, um einen entsprechenden Bildstreifen $B_2$ zu erstellen. Dies wird, wie in Fig. 5 verdeutlicht, für alle nachfolgenden Positionen abhängig von der Geschwindigkeit und damit abhängig vom Abstand durchgeführt.

Auf diese Weise kann ein Abbild des Straßenzuges erzeugt werden, welches kaum geometrische Verzerrungen aufweist und somit hochgenau ist.

Abschließend wird in Fig. 6 ein stark schematisiertes Beispiel für ein so erzeugtes Straßenzugpanoramabild 60 dargestellt. Auf dem Straßenzugpanoramabild 60 können einzelne Objekte 64 wie Autos oder Lkws, die sich auf Parkplätzen befinden, aber auch Schilder 65 erkannt werden. Auf diesen Schildern 65 können beispielsweise Parkinformationen vorhanden sein. Auch werden beispielsweise komplette beziehungsweise Ausschnitte von Laternen 66 dargestellt. Wesentlich hierbei ist es, dass der Straßenrand vorhanden ist, um ausreichend Daten für statische Informationen für das Parkmanagementsystem zu ermitteln. Bei den in Fig. 6 schraffiert dargestellten Objekten handelt es sich beispielsweise um im Hintergrund befindliche Häuser 67.

Mittels gestichelter Linien sind die einzelnen Bildstreifen angedeutet, welche zum Erzeugen des Straßenzugpanoramabild 60 verwendet wurden. Aus Übersichtsgründen sind diese nicht maßstabsgetreu, da der hier dargestellte Anteil eines Straßenzuges von ca. 30 m aus ca. 100 einzelnen Bildstreifen zusammengesetzt ist. Basierend auf diesem Straßenzugpanoramabild 60 ist es somit möglich, Entfernungen zwischen Objekten abzumessen und daraus Informationen für statische Parkdaten zu ermitteln. Das Ausmessen erfolgt hochgenau, da durch das verwendete erfindungsgemäße Verfahren kaum geometrische Verzerrungen vorhanden sind, so dass beispielsweise der Abstand zwischen der Laterne 66 und einem Baum 63 in Pixeln aus dem erzeugten Straßenzugpanoramabild ermittelt werden kann. Ist die Pixelanzahl bekannt, so kann unter Berücksichtigung der zuvor erläuterten Rechnung der Abstand zwischen den Objekten rückgerechnet werden. Diese Informationen sind wesentlich für die Ermittlung von statischen Parkraumdaten.

Mit dem erfindungsgemäßen Verfahren und dem erfindungsgemäßen System ist es möglich, ein hochgenaues, verortetes Straßenzugpanoramabild eines Straßenzuges zu erzeugen.

**Patentansprüche**

1. Verfahren zum Erstellen eines räumlich hochgenauen, verorteten Straßenzugpanoramabildes (60) eines Straßenzuges aus einem mittels eines Fahrzeuges (40) aufgenommenen kontinuierlichen Film mit Ortsinformationen,

wobei der Film

Bilddaten in einem 90° Winkel zum Verlauf des Straßenzuges, welche als Null-Position (15) bezeichnet wird, beinhaltet und

einen Erfassungswinkel ($\alpha$) von mindestens 20° in der Horizontalen aufweist, wobei mindestens 5° des Erfassungswinkels vor ($\alpha_1$) und hinter ($\alpha_2$) der Null-Position (15) vorhanden sind

wobei mittels der Ortsinformation zu jedem Frame des Filmes eine Aufnahmeposition ($P_1$, $P_2$, $P_3$, $P_4$, $P_5$) ermittelt wird,

wobei in einem Analyseschritt

der physikalische Abstand $e_1$ zwischen den Aufnahmepositionen ($P_1$, $P_2$, $P_3$, $P_4$ und $P_5$) eines ersten ($F_1$) und eines nachfolgenden Frames ($F_2$) berechnet wird,

ein Bildstreifen ($B_1$) des ersten Frames ($F_1$) von der Null-Position (15) in Richtung der Aufnahmeposition ($P_2$) des nachfolgenden Frames ($F_2$), welche mit einem ersten Teil des Abstandes ($f_1$) korrespondiert und

ein Bildstreifen ($B_2$) des nachfolgenden Frames ($F_2$) von der Null-Position (15) in Richtung der Aufnahmeposition (P1) des ersten Frames (F1), welcher mit einem zweiten Teil des Abstandes ($f_2$) korrespondiert zum Erstellen des Straßenzugpanoramabildes (60) verwendet wird, wobei der erste und der zweite Teil des Abstandes ($f_1$, $f_2$) zusammen dem gesamten Abstand ($e_1$) entsprechen,

wobei für die zur Erstellung des Straßenzugpanormabildes verwendeten Frames ($F_1$, $F_2$, $F_3$, $F_4$, $F_5$) die Pixel ermittelt werden, welche auf der Null-Position (15) der Frames ($F_1$, $F_2$, $F_3$, $F_4$, $F_5$) liegen,

wobei der Analyseschritt für jeden Frame ($F_1$, $F_2$, $F_3$, $F_4$, $F_5$) des Filmes, der den Straßenzug zeigt, durchgeführt wird, wobei jeweils der Abstand ($e_1$, $e_2$, $e_3$, $e_4$) zwischen der Aufnahmeposition von zwei benachbarten Frames ermittelt wird.

2. Verfahren nach Anspruch 1,
**dadurch gekennzeichnet,**
**dass** beim ersten ($F_1$) und letzten Frame (Fs) des Filmes jeweils nur die in Richtung des Verlaufs des Straßenzuges von der Null-Position (15) ausgehenden Anteile verwendet werden.

3. Verfahren nach Anspruch 1 bis 2,
**dadurch gekennzeichnet,**
**dass** das Straßenzugpanoramabild (60) aus den Bildstreifen ($B_1$, $B_2$) zusammengesetzt wird, wobei das Straßenzugpanoramabild (60) mit der Länge des Straßenzuges korrespondiert.

4. Verfahren nach einem der Ansprüche 1 bis 3,
**dadurch gekennzeichnet,**
**dass** der erste Teil des Abstandes ($f_1$) und der zweite Teil des Abstandes ($f_2$) jeweils einer Hälfte des Abstandes ($e_1$) entsprechen.

5. Verfahren nach einem der Ansprüche 1 bis 4,
**dadurch gekennzeichnet,**
**dass** die Aufnahmeposition ($P_1$, $P_2$, $P_3$, $P_4$, $P_5$) relativ zum Beginn des Straßenzuges ermittelt wird.

6. Verfahren nach einem der Ansprüche 1 bis 5,
**dadurch gekennzeichnet,**
**dass** der Abstand in Pixel eines Frames ($F_1$, $F_2$, $F_3$, $F_4$, $F_5$) umgerechnet wird.

7. Verfahren nach einem der Ansprüche 1 bis 6,
**dadurch gekennzeichnet,**
**dass** der Film derart gewählt wird, dass 10 cm Abstand ($e_1$) mindestens 35 Pixeln entsprechen.

8. Verfahren nach einem der Ansprüche 1 bis 7,
**dadurch gekennzeichnet,**
**dass** im Analyseschritt eine Tiefe (d) im Bereich zwischen 3,5 m und 4,5 m verwendet wird.

9. Verfahren nach einem der Ansprüche 1 bis 8,

**dadurch gekennzeichnet,**
**dass** der Film derart gewählt wird, dass 1° Erfassungswinkel ($\alpha$) in der Horizontalen mindestens 25 Pixel aufweist.

**10.** Verfahren nach einem der Ansprüche 1 bis 9,
**dadurch gekennzeichnet,**
**dass** die Null-Position (15) mittels einer Hauswandecke und/oder eines Kalibrierungsmittels bestimmt wird.

**11.** Verfahren nach einem der Ansprüche 1 bis 10,
**dadurch gekennzeichnet,**
**dass** die Null-Position (15) mittels Positions- und/oder Orientierungsdaten des Fahrzeuges (40) korrigiert wird.

**12.** Verfahren nach einem der Ansprüche 1 bis 11,
**dadurch gekennzeichnet,**
**dass** der Film derart gewählt wird, dass er einen Erfassungswinkel ($\alpha$) in der Vertikalen von mindestens 100° und in der Horizontalen ($\beta$) von mindestens 50° aufweist.

**13.** System zum Erstellen eines räumlich hochgenauen, verorteten Straßenzugpanoramabildes (60) eines Straßenzuges aus einem mittels eines Fahrzeugs (40) aufgenommenen kontinuierlichen Film mit Ortsinformationen mit einer Recheneinheit zum Ausführen eines Verfahrens nach einem der Ansprüche 1 bis 12.

**Claims**

**1.** Method for producing a spatially highly precise, localized panoramic street image (60) of a street from a continuous film with location information recorded by means of a vehicle (40),

wherein the film

contains image data at an angle of 90° to the course of the street, which is referred to as zero position (15), and has a capture angle ($\alpha$) of at least 20° in the horizontal, wherein at least 5° of the capture angle are present before ($\alpha_1$) and after ($\alpha_2$) the zero position (15),

wherein by means of the location information a recording position ($P_1$, $P_2$, $P_3$, $P_4$, $P_5$) is ascertained for each frame of the film,
wherein in an analysis step

the physical distance $e_1$ between the recording positions ($P_1$, $P_2$, $P_3$, $P_4$ and $P_5$) of a first ($F_1$) and a subsequent frame ($F_2$) is calculated,
an image strip ($B_1$) of the first frame ($F_1$) from the zero position (15) in the direction of the recording position ($P_2$) of the subsequent frame ($F_2$), which corresponds with a first part of the distance ($f_1$), and an image strip ($B_2$) of the subsequent frame ($F_2$) from the zero position (15) in the direction of the recording position ($P_1$) of the first frame ($F_1$), which corresponds with a second part of the distance ($f_2$), are used to produce the panoramic street image (60), wherein the first and the second part of the distance ($f_1$, $f_2$) together correspond to the entire distance ($e_1$)
wherein the pixels are determined for the frames (F1, F2, F3, F4, F5) used to create the street panorama image which are located at the zero position (15) of the frames (F1, F2, F3, F4, F5),

wherein the analysis step is carried out for each frame ($F_1$, $F_2$, $F_3$, $F_4$, $F_5$) of the film that shows the street whereby in each case the distance ($e_1$, $e_2$, $e_3$, $e_4$) between the recording position of two adjacent frames is determined.

**2.** Method according to claim 1,
**characterized in that**

in the case of the first ($F_1$) and the last frame ($F_5$) of the film only the portions starting from the zero position (15) in the direction of the course of the street are used in each case.

**3.** Method according to claim 1 to 2,\

**characterized in that**
the panoramic street image (60) is assembled from the image strips ($B_1$, $B_2$), wherein the panoramic street image (60) corresponds with the length of the street.

4. Method according to any one of claims 1 to 3,
   **characterized in that**
   the first part of the distance ($f_1$) and the second part of the distance ($f_2$) each correspond to half of the distance ($e_1$).

5. Method according to any one of claims 1 to 4,
   **characterized in that**
   the recording position ($P_1$, $P_2$, $P_3$, $P_4$, $P_5$) is ascertained relative to the beginning of the street.

6. Method according to any one of claims 1 to 5,
   **characterized in that**
   the distance is converted into pixels of a frame ($F_1$, $F_2$, $F_3$, $F_4$, $F_5$).

7. Method according to any one of claims 1 to 6,
   **characterized in that**
   the film is chosen such that a 10 cm distance ($e_1$) corresponds to at least 35 pixels.

8. Method according to any one of claims 1 to 7,
   **characterized in that**
   in the analysis step a depth (d) in the range between 3.5 m and 4.5 m is used.

9. Method according to any one of claims 1 to 8,
   **characterized in that**
   the film is chosen such that 1° capture angle ($\alpha$) in the horizontal has at least 25 pixels.

10. Method according to any one of claims 1 to 9,
    **characterized in that**
    the zero position (15) is determined by means of a corner of a house wall and/or a calibration means.

11. Method according to any one of claims 1 to 10,
    **characterized in that**
    the zero position (15) is corrected by means of position and/or orientation data of the vehicle (40).

12. Method according to any one of claims 1 to 11,
    **characterized in that**
    the film is chosen such that it has a capture angle ($\alpha$) in the vertical of at least 100° and in the horizontal ($\beta$) of at least 50°.

13. System for producing a spatially highly precise, localized panoramic street image (60) of a street from a continuous film with location information recorded by means of a vehicle (40)
    with a computing unit for executing a method according to any one of claims 1 to 12.


**Revendications**

1. Procédé de génération d'une image panoramique de route (60) localisée et de haute précision dans l'espace d'une route à partir d'un film continu enregistré au moyen d'un véhicule (40) avec des informations de localisation,

   dans lequel le film

   contient des données d'image dans un angle de 90° par rapport au tracé de la route qui est désigné par position nulle (15), et
   présente un angle de détection ($\alpha$) d'au moins 20° dans l'horizontale, au moins 5° de l'angle de détection étant présents avant ($\alpha_1$) et derrière ($\alpha_2$) la position nulle (15)

dans lequel une position d'enregistrement $(P_1, P_2, P_3, P_4, P_5)$ est définie au moyen de l'information de localisation pour chaque trame du film,
dans lequel dans une étape d'analyse,

la distance physique $e_1$ est calculée entre les positions d'enregistrement $(P_1, P_2, P_3, P_4, P_5)$ d'une première $(F_1)$ et d'une trame $(F_2)$ suivante,
une bande d'image $(B_1)$ de la première trame $(F_1)$ de la position nulle (15) en direction de la position d'enregistrement $(P_2)$ de la trame suivante $(F_2)$ qui correspond à une première partie de la distance $(f_1)$ et une bande d'image $(B_2)$ de la trame suivante $(F_2)$ de la position nulle (15) en direction de la position d'enregistrement $(P_1)$ de la première trame $(F_1)$ qui correspond à une seconde partie de la distance $(f_2)$, sont utilisées pour la génération de l'image panoramique de route (60), la première et la seconde partie de la distance $(f_1, f_2)$ correspondant ensemble à la distance entière $(e_1)$,

dans lequel pour les trames $(F_1, F_2, F_3, F_4, F_5)$ utilisées pour la génération de l'image panoramique de route, les pixels sont définis, lesquels se trouvent sur la position nulle (15) des trames $(F_1, F_2, F_3, F_4, F_5)$,
dans lequel l'étape d'analyse pour chaque trame $(F_1, F_2, F_3, F_4, F_5)$ du film qui montre la route, est réalisée,
dans lequel respectivement la distance $(e_1, e_2, e_3, e_4)$ est définie entre la position d'enregistrement de deux trames contiguës.

2. Procédé selon la revendication 1,
**caractérisé en ce que**
pour la première $(F_1)$ et la dernière trame $(F_5)$ du film, à chaque fois seules les parts sortant en direction du tracé de la route de la position nulle (15) sont utilisées.

3. Procédé selon l'une des revendications 1 à 2,
**caractérisé en ce que**
l'image panoramique de route (60) est composée des bandes d'image $(B_1, B_2)$, l'image panoramique de route (60) correspondant à la longueur de la route.

4. Procédé selon l'une des revendications 1 à 3,
**caractérisé en ce que**
la première partie de la distance $(f_1)$ et la seconde partie de la distance $(f_2)$ correspondent chacune à une moitié de la distance $(e_1)$.

5. Procédé selon l'une des revendications 1 à 4,
**caractérisé en ce que**
la position d'enregistrement $(P_1, P_2, P_3, P_4, P_5)$ est définie par rapport au début de la route.

6. Procédé selon l'une des revendications 1 à 5,
**caractérisé en ce que**
la distance est convertie en pixel d'une trame $(F_1, F_2, F_3, F_4, F_5)$.

7. Procédé selon l'une des revendications 1 à 6,
**caractérisé en ce que**
le film est choisi de telle manière que 10 cm de distance $(e_1)$ correspondent à au moins 35 pixels.

8. Procédé selon l'une des revendications 1 à 7,
**caractérisé en ce que**
dans l'étape d'analyse, une profondeur (d) dans la plage entre 3,5 m et 4,5 m est utilisée.

9. Procédé selon l'une des revendications 1 à 8,
**caractérisé en ce que**
le film est choisi de telle manière que 1° d'angle de détection $(\alpha)$ dans l'horizontale présente au moins 25 pixels.

10. Procédé selon l'une des revendications 1 à 9,
**caractérisé en ce que**
la position nulle (15) est déterminée au moyen d'un angle de mur de maison et/ou d'un moyen d'étalonnage.

**11.** Procédé selon l'une des revendications 1 à 10,
**caractérisé en ce que**
la position nulle (15) est corrigée au moyen de données de position et/ou d'orientation du véhicule (40).

**12.** Procédé selon l'une des revendications 1 à 11,
**caractérisé en ce que**
le film est choisi de telle manière qu'il présente un angle de détection ($\alpha$) dans la verticale d'au moins 100° et dans l'horizontale ($\beta$) d'au moins 50°.

**13.** Système de génération d'une image panoramique de route (60) localisée et de haute précision dans l'espace d'une route à partir d'un film continu enregistré au moyen d'un véhicule (40) avec des informations de localisation avec une unité de calcul pour la réalisation d'un procédé selon l'une des revendications 1 à 12.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018214510 A1
- EP 20159008 A
- US 2007076016 A1
- US 2008187181 A1
- WO 0161985 A2
- US 2005111753 A1